# EUROPEAN PATENT APPLICATION

(11) **EP 4 597 772 A1**
(43) Date of publication of application: **06.08.2025**
(21) Application number: 23890239.9
(22) Date of filing: 30.06.2023
(51) Int. Cl.: H02H 5/04, H02H 3/20

(54) **TRANSIENT SUPPRESSION DEVICE PROTECTION CIRCUIT, METHOD AND APPARATUS**

(30) Priority: 15.11.2022 CN 202211430801
(71) Applicant: ZTE CORPORATION, Shenzhen, Guangdong 518057 (CN)
(72) Inventor: ZHANG, Benjun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/105397
(87) International publication number: WO 2024/103797

(57) **Abstract**

Disclosed in the present application are a transient suppression device protection circuit, method and apparatus. The transient suppression device protection circuit comprises: a transient suppression device; a first temperature protection unit, which is connected in series to the transient suppression device and used for being disconnected when the temperature of the transient suppression device reaches or exceeds a preset first temperature, so as to cut off a current loop in which the transient suppression device is located; a second temperature protection unit, which is connected in parallel to the transient suppression device and used for being disconnected when the temperature of the transient suppression device reaches or exceeds a preset second temperature; and an alarm module, which is connected in series to the second temperature protection unit and used for giving an alarm regarding temperature when it is detected that the second temperature protection unit is disconnected, wherein the preset first temperature is higher than the preset second temperature.

## Description

### CROSS-REFERENCE TO RELATED APPLICATIONS

The present application claims the priority of the Chinese patent application No. 202211430801.2 filed on November 15, 2022, which is incorporated herein in its entirety by reference.

### TECHNICAL FIELD

The present application relates to the technical field of circuit safety, in particular to a transient suppression device protection circuit, method and apparatus.

### BACKGROUND

Transient suppression devices are widely applied to communication devices, electronic devices, and other electronic devices to play multiple roles in voltage protection, transient suppression, lightning protection, surge current suppression, peak pulse absorption, amplitude limiting, protection of semiconductor components and the like. However, for some transient suppression devices, such as metal oxide varistors, although discharge current capacity of the metal oxide varistors is large, energy capacity thereof is not large, that is, rated power thereof is very small. During long-term use or under the impact of excessive stress, it is prone to failure and even causing serious problems such as burning, which affects use safety of the transient suppression devices.

### SUMMARY

The main objective of the present application is to provide a transient suppression device protection circuit, aimed at improving use safety of a transient suppression device.

To achieve the above objective, the present application provides a transient suppression device protection circuit, and the transient suppression device protection circuit includes:
a transient suppression device;
a first temperature protection unit, connected in series to the transient suppression device and configured to be disconnected when a temperature of the transient suppression device reaches or exceeds a preset first temperature, so as to cut off a current loop in which the transient suppression device is located;
a second temperature protection unit, connected in parallel to the transient suppression device and configured to be disconnected when the temperature of the transient suppression device reaches or exceeds a preset second temperature; and
an alarm module, connected in series to the second temperature protection unit and configured to give an alarm regarding the temperature when it is detected that the second temperature protection unit is disconnected;
wherein the preset first temperature is higher than the preset second temperature.

To achieve the above objective, the present application further provides a transient suppression device protection method, applied to the above transient suppression device protection circuit, wherein the transient suppression device protection method includes:
cutting off a current loop in which a transient suppression device is located by controlling a first temperature protection unit connected in series to the transient suppression device to be disconnected if a temperature of the transient suppression device reaches or exceeds a preset first temperature; and
giving an alarm regarding a temperature by controlling a second temperature protection unit connected in parallel to the transient suppression device to be disconnected if the temperature of the transient suppression device reaches or exceeds a preset second temperature, wherein the preset first temperature is higher than the preset second temperature.

To achieve the above objective, the present application further provides a transient suppression device protection apparatus, and the transient suppression device protection apparatus includes the above transient suppression device protection circuit. Reference is made to the above description for details, which will not be repeated here.

According to the technical solutions of the present application, the transient suppression device protection circuit is composed of the transient suppression device, the first temperature protection unit, the second temperature protection unit and the alarm module. In the transient suppression device protection circuit, the first temperature protection unit is connected in series to the transient suppression device, the second temperature protection unit is connected in parallel to the transient suppression device, and the alarm module is connected in series to the second temperature protection unit. In this way, when a temperature of the transient suppression device rises, both the first temperature protection unit and the second temperature protection unit experience a temperature rise due to absorbing heat transferred by the transient suppression device through heat conduction. When the transient suppression device reaches or exceeds the preset second temperature, the second temperature protection unit is disconnected due to an excessive temperature, and the alarm module gives the alarm regarding the temperature when it is detected that the second temperature protection unit is disconnected, so as to prompt a user that the temperature of the transient suppression device is high, thus achieving a purpose of monitoring a temperature status of the transient suppression device. When the temperature of the transient suppression device continues to rise to reach or exceed the preset first temperature, the first temperature protection unit is disconnected due to the excessive temperature. Since the first temperature protection unit is connected in series to the transient suppression device, the current loop in which the transient suppression device is located is cut off, thereby avoiding burning of the transient suppression device due to the excessive temperature. Therefore, the present application may monitor the temperature status of the transient suppression device in real time when the temperature of the transient suppression device rises, and directly cut off the current loop of the transient suppression device when the temperature of the transient suppression device is excessively high, so as to prevent the transient suppression device from burning due to the excessive temperature, thereby improving use safety of the transient suppression device.

### BRIEF DESCRIPTION OF DRAWING(S)

In order to illustrate technical solutions in embodiments of the present application or the prior art more clearly, accompanying drawings needing to be used in description of the embodiments or the prior art will be introduced below briefly. Apparently, the accompanying drawings in the following description are only some embodiments of the present application, and those ordinarily skilled in the art may further obtain other accompanying drawings according to structures shown by these accompanying drawings without creative efforts.
Fig. 1 is a circuit function block diagram of an embodiment of a transient suppression device protection circuit in the present application.
Fig. 2 is a circuit function block diagram of an embodiment of a transient suppression device protection circuit in the present application in case that a first temperature protection unit is a first temperature protection resistor and a second temperature protection unit is a second temperature protection resistor.
Fig. 3 is a circuit function block diagram of an embodiment of a transient suppression device protection circuit in the present application in case that an alarm module is composed of an optocoupler and a processor unit.
Fig. 4 is a circuit function block diagram of an embodiment of a transient suppression device protection circuit in the present application in case that an alarm module is composed of an optocoupler, a processor unit and an LED light.
Fig. 5 is a circuit function block diagram of an embodiment of a transient suppression device protection circuit in the present application in case that an alarm module is composed of an optocoupler, a processor unit, an LED light, a capacitor and an anti-reverse diode.
Fig. 6 is a circuit function block diagram of an embodiment of a transient suppression device protection circuit in the present application in case that an alarm module is composed of an optocoupler, a processor unit, an LED light, a capacitor, an anti-reverse diode, a first current-limiting resistor and a second current-limiting resistor.
Fig. 7 is a circuit function block diagram of another embodiment of a transient suppression device protection circuit in the present application in case that an alarm module is composed of an optocoupler, a processor unit, an LED light, a capacitor, an anti-reverse diode, a first current-limiting resistor and a second current-limiting resistor.
Fig. 8 is a circuit function block diagram of yet another embodiment of a transient suppression device protection circuit in the present application in case that an alarm module is composed of an optocoupler, a processor unit, an LED light, a capacitor, an anti-reverse diode, a first current-limiting resistor and a second current-limiting resistor.
Fig. 9 is a flowchart of an embodiment of a transient suppression device protection method in the present application.

The objective implementation, functional characteristics, and advantages of the present application will be further explained in conjunction with the embodiments and with reference to the accompanying drawings.

### Description of reference numerals:

| Reference numeral | Name | Reference numeral | Name |
|---|---|---|---|
| 100 | Transient suppression device | L | LED light |
| 200 | First temperature protection unit | C | Capacitor |
| 300 | Second temperature protection unit | D | Anti-reverse diode |
| 400 | Alarm module | R3 | First current-limiting resistor |
| 500 | Transient suppression device module | R4 | Second current-limiting resistor |
| 600 | Processor unit | R2 | Second temperature protection resistor |
| R1 | First temperature protection resistor | U | Optocoupler |

### DETAILED DESCRIPTION

The technical solutions in the embodiments of the present application will be clearly and completely described in the following with reference to the accompanying drawings in the embodiments of the present application. Apparently, the described embodiments are only some rather than all of the embodiments of the present application. All other embodiments obtained by those ordinarily skilled in the art based on the embodiments in the present application without making creative efforts shall fall within the scope of protection of the present application.

It should be noted that all directional indications (such as upper, lower, left, right, front, back, etc.) in the embodiments of the present application are only used to explain the relative position relationships and motions among the components in a specific posture (as shown in the attached figure). If the specific posture changes, the directional indication will also change accordingly.

In addition, descriptions of "first", "second", etc. in the present application are only used for descriptive purposes, and cannot be understood as indicating or implying relative importance or implicitly indicating the quantity of the indicated technical features. Therefore, the features defined by "first" and "second" may explicitly or implicitly include at least one of the features. In addition, the technical solutions between various embodiments may be combined with each other, but the combination must be based on the ability of implementation by those ordinarily skilled in the art. When the combination of the technical solutions is contradictory or cannot be implemented, it should be considered that the combination of the technical solutions does not exist and does not fall within the scope of protection required by the present application.

The present application provides a transient suppression device protection circuit. In one embodiment of the present application, the transient suppression device protection circuit includes a transient suppression device, a first temperature protection unit, a second temperature protection unit and an alarm module.

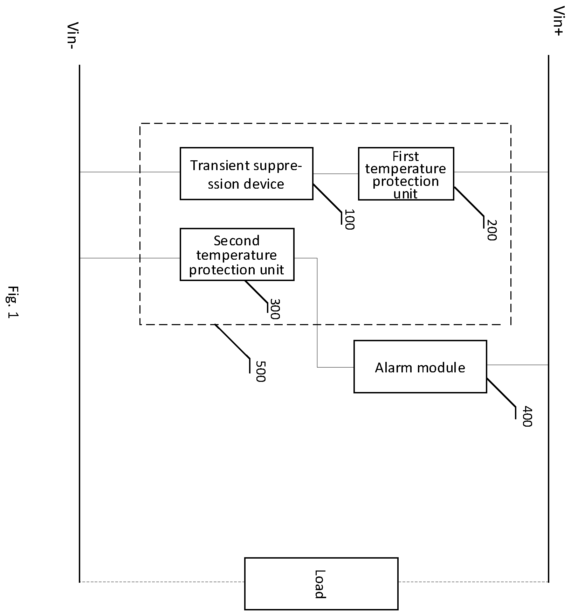

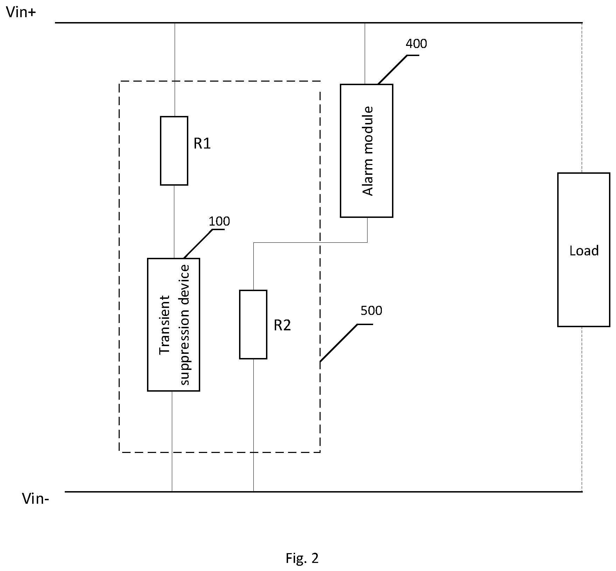

As an example, referring to Fig. 1 and Fig. 2, in the present embodiment, the transient suppression device protection circuit is composed of the transient suppression device 100, the first temperature protection unit 200, the second temperature protection unit 300 and the alarm module 400. The transient suppression device 100 is connected in series to the first temperature protection unit 200, one end of the transient suppression device 100 is connected to one end of the first temperature protection unit 200, the other end of the transient suppression device 100 is connected to a negative pole Vin- of a power supply, and the other end of the first temperature protection unit 200 is connected to a positive pole Vin+ of the power supply. The second temperature protection unit 300 is connected in parallel to the transient suppression device 100, the second temperature protection unit 300 is connected in series to the alarm module 400, one end of the second temperature protection unit 300 is connected to the negative pole Vin- of the power supply, the other end of the second temperature protection unit 300 is connected to one end of the alarm module 400, and the other end of the alarm module 400 is connected to the positive pole Vin+ of the power supply. There is heat conduction between the transient suppression device 100 and the first temperature protection unit 200, the first temperature protection unit 200 absorbs heat emitted by the transient suppression device 100, so a temperature of the first temperature protection unit 200 rises with temperature rise of the transient suppression device 100. There is heat conduction between the transient suppression device 100 and the second temperature protection unit 300, the second temperature protection unit 300 absorbs the heat emitted by the transient suppression device 100, so a temperature of the second temperature protection unit 300 rises with temperature rise of the transient suppression device 100. There is also a load connected between the positive pole of the power supply and the negative pole of the power supply.

The transient suppression device 100, the first temperature protection unit 200 and the second temperature protection unit 300 may be packaged as a transient suppression device module 500, so that a distance among the transient suppression device 100, the first temperature protection unit 200 and the second temperature protection unit 300 is not too far, so as to ensure heat conduction efficiency between the transient suppression device 100 and the first temperature protection unit 200, as well as to ensure heat conduction efficiency between the transient suppression device 100 and the second temperature protection unit 300.

During the temperature rise of the transient suppression device 100, both the first temperature protection unit 200 and the second temperature protection unit 300 absorb the heat emitted by the transient suppression device 100 through the heat conduction, resulting in the temperature rise. When the temperature of the transient suppression device 100 reaches or exceeds the preset second temperature, the second temperature protection unit 300 is first disconnected due to the excessive temperature. At this time, the alarm module 400 and the negative pole Vin-of the power supply are disconnected. Due to the series connection of a second temperature protection resistor R2 and the alarm module 400, a potential of an input end of the alarm module 400 will increase, thereby generating a high-level signal. The alarm module 400 gives an alarm regarding a temperature when detecting the high-level signal, so as to prompt a user that the temperature of the transient suppression device 100 has reached or exceeded the preset second temperature value, thereby achieving monitoring of a temperature status of the transient suppression device 100. If the temperature of the transient suppression device 100 continues rising after reaching or exceeding the preset second temperature, when the temperature of the transient suppression device 100 reaches or exceeds the preset first temperature, the first temperature protection unit 200 is disconnected due to the excessive temperature. At this time, since the first temperature protection unit 200 is connected in series to the transient suppression device 100, after the first temperature protection unit 200 is disconnected, a circuit loop in which the transient suppression device 100 is located is disconnected. At this time, no current passes through the transient suppression device 100, the transient suppression device 100 will no longer work, the temperature of the transient suppression device 100 falls back, that is, the temperature decreases, thus preventing the temperature of the transient suppression device 100 from continuing rising and avoiding burning of the transient suppression device 100 due to the excessive temperature, wherein an ignition point of the transient suppression device 100 is greater than the preset first temperature. In this way, in the embodiment of the present application, the temperature status of the transient suppression device 100 may be monitored in real time when the temperature of the transient suppression device 100 rises, and the current loop in which the transient suppression device 100 is located is automatically disconnected when the temperature of the transient suppression device 100 reaches or exceeds the preset first temperature, so as to prevent the transient suppression device 100 from burning due to the excessive temperature, thereby improving use safety of the transient suppression device.

As an example, referring to Fig. 1 and Fig. 2, the first temperature protection unit 200 is a first temperature protection resistor R1, and the second temperature protection unit 300 is a second temperature protection resistor R2. Both the first temperature protection resistor R1 and the second temperature protection resistor R2 may be thermal fuses, both the first temperature protection resistor R1 and the second temperature protection resistor R2 undergo the temperature rise due to absorption of the heat emitted by the transient suppression device 100 through heat conduction, and a fusing point of the first temperature protection resistor R1 is higher than a fusing point of the second temperature protection resistor R2. In this way, during the temperature rise of the transient suppression device 100, both the first temperature protection resistor R1 and the second temperature protection resistor R2 undergo the temperature rise due to the absorption of the heat emitted by the transient suppression device 100 through heat conduction. When the temperature of the transient suppression device 100 reaches or exceeds the preset second temperature, since the fusing point of the first temperature protection resistor R1 is higher than the fusing point of the second temperature protection resistor R2, the second temperature protection resistor R2 is fused first due to the excessive temperature, thus the second temperature protection resistor R2 is disconnected, and the alarm regarding the temperature is triggered, thereby achieving monitoring of the temperature status of the transient suppression device 100. If the temperature of the transient suppression device 100 continues rising after reaching or exceeding the preset second temperature, when the temperature of the transient suppression device 100 reaches or exceeds the preset first temperature, the first temperature protection resistor R1 is fused later due to the excessive temperature, thus the first temperature protection resistor R1 is disconnected, and cutting off of the current loop in which the transient suppression device 100 is located is triggered, thereby preventing the transient suppression device 100 from burning due to the excessive temperature.

As an example, the first temperature protection unit 200 may further be a first switch unit, and the first switch unit is configured to monitor the temperature of the transient suppression device 100. When the temperature of the transient suppression device 100 is lower than the preset first temperature, the first switch unit is in a switch-on state, and when the temperature of the transient suppression device 100 reaches or exceeds the preset first temperature, the first switch unit switches from the switch-on state to a switch-off state. The second temperature protection unit 300 may further be a second switch unit, and the second switch unit is configured to monitor the temperature of the transient suppression device 100. When the temperature of the transient suppression device 100 is lower than the preset second temperature, the second switch unit is in a switch-on state, and when the temperature of the transient suppression device 100 reaches or exceeds the preset second temperature, the second switch unit switches from the switch-on state to a switch-off state.

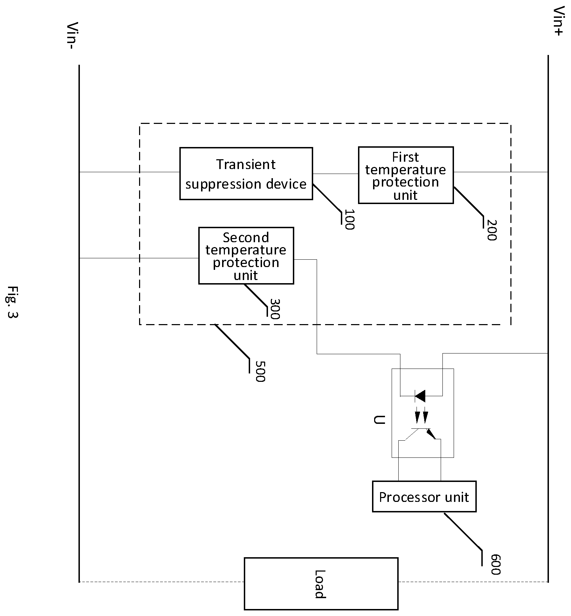

As an example, referring to Fig. 3, the alarm module 400 includes an optocoupler U and a processor unit 600. The optocoupler U is configured to perform signal conversion and isolation on an input signal, and the processor unit 600 is configured to give an alarm regarding a temperature according to an output signal of the optocoupler U. A first input end of the optocoupler U is connected to the positive pole Vin+ of the power supply, a second input end of the optocoupler U is connected to the second temperature protection unit 300, and an output end of the optocoupler U is connected to an input end of the processor unit. In this way, when the temperature of the transient suppression device 100 reaches or exceeds the preset second temperature, the second temperature protection unit 300 is first disconnected due to the excessive temperature. At this time, the optocoupler U and the negative pole Vin- of the power supply are disconnected, and a potential of the input end of the optocoupler U rises to generate a high-level signal. After the high-level signal flows to the optocoupler U, the optocoupler U converts the high-level signal into a low-level logic signal and outputs the low-level logic signal to the processor unit 600. After receiving the low-level logic signal, the processor unit 600 gives an alarm to the outside. The alarm may be given by playing an alarm sound or an alarm image, thus achieving monitoring of the temperature of the transient suppression device 100.

In addition, it should be noted that the high-level signal is prone to impacting some components and causing damage to the components in the circuit. In the embodiment of the present application, the optocoupler U may convert the high-level signal into the low-level logic signal and may isolate the high-level signal at the input end of the optocoupler U, so as to prevent component damage caused by the impact of the high-level signal on the components in the circuit.

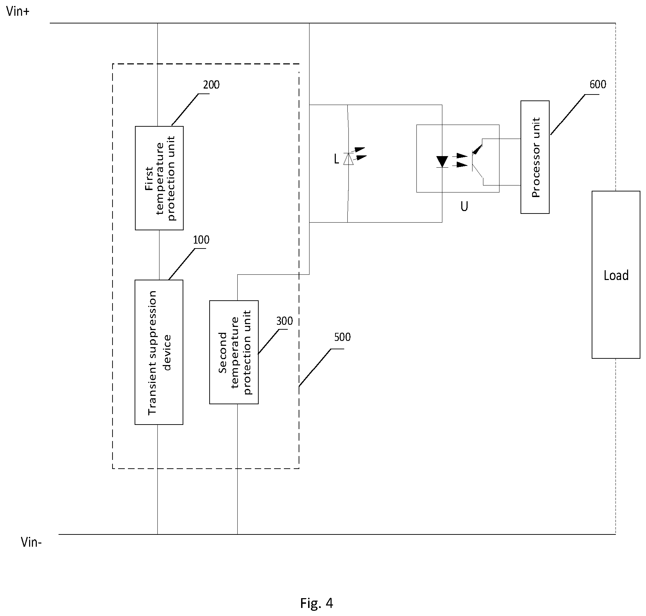

As an example, referring to Fig. 3 and Fig. 4, the alarm module 400 further includes an LED light L. The LED light L is connected in series to the second temperature protection unit 300 and in parallel to the optocoupler U. The LED light L displays light in a preset first color during connection and displays light in a preset second color during disconnection. In this way, when the temperature of the transient suppression device 100 reaches or exceeds the preset second temperature, the second temperature protection unit 300 is first disconnected due to the excessive temperature. As the second temperature protection unit 300 is connected in series to the LED light L, the LED light L is converted from a connected state to a disconnected state, and the color of the light displayed by the LED light L is converted from the preset first color to the preset second color. In this way, the color conversion of the light may be used to prompt personnel of a device site where the transient suppression device 100 is located that the temperature of the transient suppression device 100 reaches or exceeds the preset second temperature, thereby achieving the purpose of real-time monitoring of the temperature status of the transient suppression device 100 and giving the alarm regarding the temperature at the device site where the transient suppression device 100 is located.

As an example, the preset first color may be green, and the preset second color may be red.

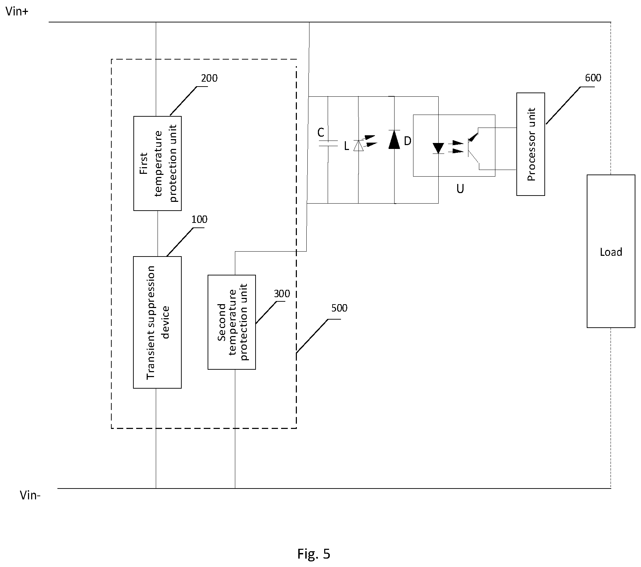

As an example, referring to Fig. 4 and Fig. 5, the alarm module 400 further includes a capacitor C and an anti-reverse diode D. The capacitor C is connected in series to the second temperature protection unit 300, and the capacitor C is connected in parallel to the optocoupler U. In this way, when the temperature of the transient suppression device 100 reaches or exceeds the preset second temperature, the second temperature protection unit 300 is first disconnected due to the excessive temperature. At this time, the optocoupler U and the negative pole Vin- of the power supply are disconnected, and the potential of the input end of the optocoupler U rises to generate the high-level signal. Since the capacitor C is connected in parallel to the optocoupler U, the capacitor C performs filtering processing on the high-level signal to remove noise from the high-level signal.

The anti-reverse diode D is connected in series to the second temperature protection unit 300, and the anti-reverse diode D is connected in parallel to the optocoupler U. In this way, when the positive pole of the power supply and the negative pole of the power supply are in reversed connection, the anti-reverse diode D can protect the circuit.

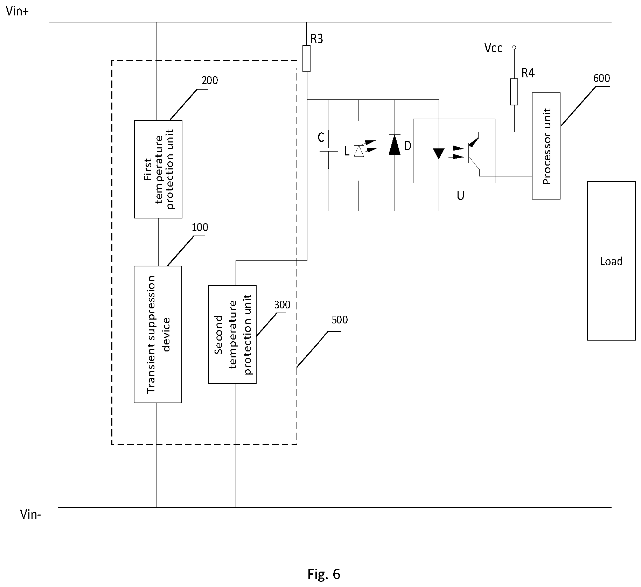

As an example, referring to Fig. 5 and Fig. 6, the alarm module 400 further includes a first current-limiting resistor R3 and a second current-limiting resistor R4. The first current-limiting resistor R3 is connected in series to the optocoupler U, the capacitor C, the anti-reverse diode D, and the LED light L simultaneously. The second current-limiting resistor R4 is connected in series to the output end of the optocoupler U. One end of the first current-limiting resistor R3 is connected to the positive pole Vin+ of the power supply, the other end of the first current-limiting resistor R3 is connected to the first input end of the optocoupler U, one end of the second current-limiting resistor R4 is connected to the output end of the optocoupler U, and the other end of the second current-limiting resistor R4 is connected to a power supplying end Vcc.

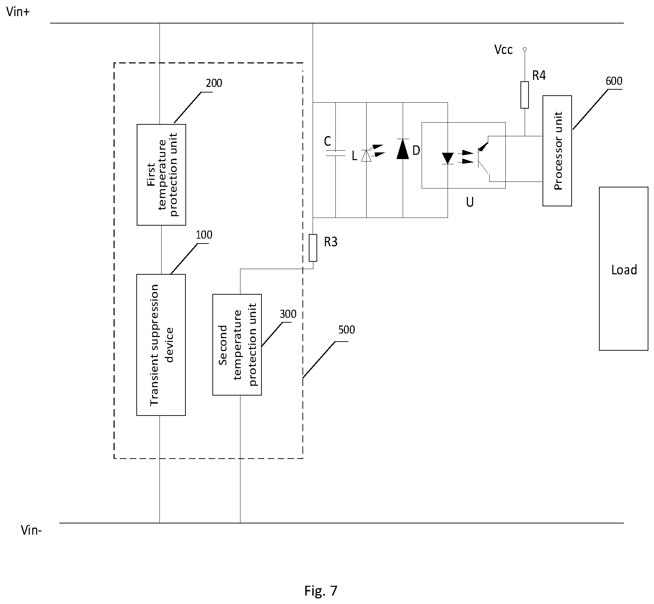

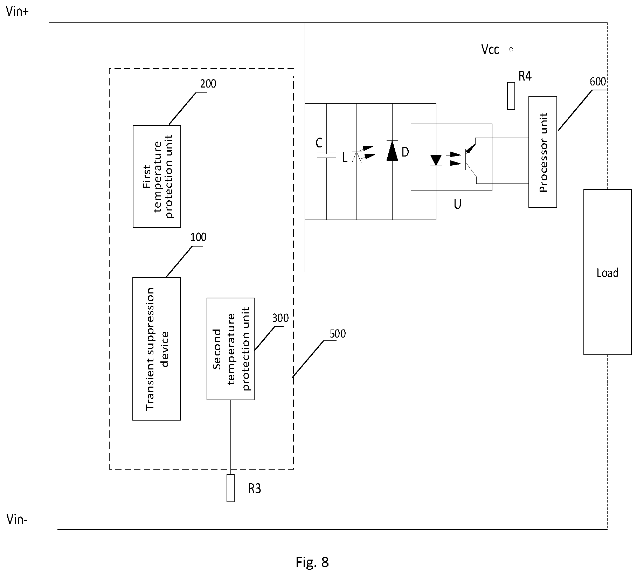

In addition, it should be noted that when the first current-limiting resistor R3 and the optocoupler U are in the same loop, the first current-limiting resistor R3 may play a role in limiting a current flowing through the optocoupler U. In addition to a deployment position in Fig. 6 above, the first current-limiting resistor R3 may also be deployed in other positions in the transient suppression device protection circuit. As an example, referring to Fig. 7, one end of the first current-limiting resistor R3 is connected to the second input end of the optocoupler U, and the other end of the first current-limiting resistor R3 is connected to the second temperature protection unit 300. As another example, referring to Fig. 8, one end of the first current-limiting resistor R3 is connected to the negative pole Vin- of the power supply, and the other end of the first current-limiting resistor R3 is connected to the second temperature protection unit 300.

In this way, in the embodiment of the present application, the first current-limiting resistor R3 is added to the loop in which the optocoupler U is located, the second current-limiting resistor R4 is added to the output end of the optocoupler U, thus the current passing through the optocoupler U may be reduced by increasing a resistance value of the resistor, thereby avoiding a problem of circuit safety caused by a low discharge current capability of the optocoupler U.

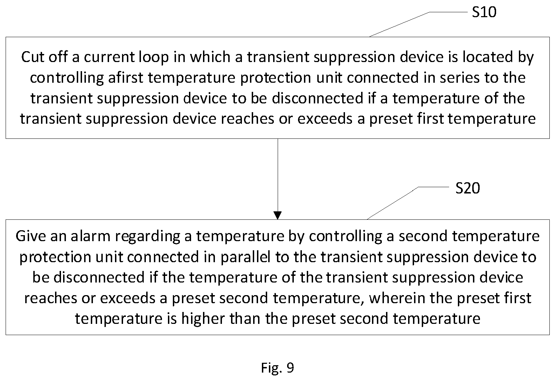

The present application further provides a transient suppression device protection method, applied to the above transient suppression device protection circuit. Referring to Fig. 9 and in conjunction with Fig. 1 to Fig. 8, the transient suppression device protection method includes:
step S10: a current loop in which a transient suppression device is located is cut off by controlling a first temperature protection unit connected in series to the transient suppression device to be disconnected if a temperature of the transient suppression device reaches or exceeds a preset first temperature; and
step S20: an alarm regarding a temperature is given by controlling a second temperature protection unit connected in parallel to the transient suppression device to be disconnected if the temperature of the transient suppression device reaches or exceeds a preset second temperature;
wherein the preset first temperature is higher than the preset second temperature.

The step of giving the alarm regarding the temperature by controlling the second temperature protection unit connected in parallel to the transient suppression device to be disconnected includes:
step S21: the second temperature protection unit is controlled to be disconnected, and a high-level signal generated when the second temperature protection unit is disconnected is collected; and
step S22: the high-level signal is converted into a corresponding low-level logic signal, and the alarm regarding the temperature is given according to the low-level logic signal.

It can be understood that, due to the use of the above transient suppression device protection circuit in the transient suppression device protection method, the embodiment of the transient suppression device protection method includes all technical solutions of all embodiments of the above transient suppression device protection circuit, and the achieved technical effects are also completely the same, which is not repeated here.

In addition, the present application further provides a transient suppression device protection apparatus, and the transient suppression device protection apparatus includes the above transient suppression device protection circuit. It can be understood that, due to the use of the above transient suppression device protection circuit in the transient suppression device protection apparatus, the embodiment of the transient suppression device protection apparatus includes all technical solutions of all embodiments of the above transient suppression device protection circuit, and the achieved technical effects are also completely the same, which is not repeated here.

The above description is only an optional embodiment of the present application and does not limit the patent scope of the present application. Any equivalent structure or equivalent transformation made under the application concept of the present application using the content of the specification and accompanying drawings of the present application, or direct/indirect application in other related arts, are included in the scope of patent protection of the present application.

## Claims

1. A transient suppression device protection circuit, wherein the transient suppression device protection circuit comprises:
a transient suppression device;
a first temperature protection unit, connected in series to the transient suppression device and configured to be disconnected when a temperature of the transient suppression device reaches or exceeds a preset first temperature, so as to cut off a current loop in which the transient suppression device is located;
a second temperature protection unit, connected in parallel to the transient suppression device and configured to be disconnected when the temperature of the transient suppression device reaches or exceeds a preset second temperature; and
an alarm module, connected in series to the second temperature protection unit and configured to give an alarm regarding the temperature when it is detected that the second temperature protection unit is disconnected;
wherein the preset first temperature is higher than the preset second temperature.

2. The transient suppression device protection circuit according to claim 1, wherein the first temperature protection unit comprises a first temperature protection resistor, and the second temperature protection unit comprises a second temperature protection resistor,
the first temperature protection resistor is configured to be fused when the temperature of the transient suppression device reaches or exceeds the preset first temperature, so as to cut off the current loop in which the transient suppression device is located; and
the second temperature protection resistor is configured to be fused when the temperature of the transient suppression device reaches or exceeds the preset second temperature.

3. The transient suppression device protection circuit according to claim 2, wherein the first temperature protection resistor and the second temperature protection resistor are configured to absorb heat emitted by the transient suppression device and undergo a temperature rise, and a fusing point of the first temperature protection resistor is higher than a fusing point of the second temperature protection resistor.

4. The transient suppression device protection circuit according to claim 1, wherein the alarm module comprises an optocoupler and a processor unit,
the optocoupler is connected in series to the second temperature protection unit, and the optocoupler is configured to convert a high-level signal generated when the second temperature protection unit is disconnected into a corresponding low-level logic signal, and output the low-level logic signal to the processor unit; and
the processor unit is configured to give the alarm regarding the temperature according to the low-level logic signal.

5. The transient suppression device protection circuit according to claim 4, wherein the alarm module further comprises an LED light, and
the LED light is connected in series to the second temperature protection unit and in parallel to the optocoupler, and configured to display light in different colors before and after the second temperature protection unit is disconnected.

6. The transient suppression device protection circuit according to claim 4, wherein the alarm module further comprises a capacitor and an anti-reverse diode,
the capacitor is connected in series to the second temperature protection unit and in parallel to the optocoupler, and configured to perform filtering processing on the high-level signal; and
the anti-reverse diode is connected in series to the second temperature protection unit and in parallel to the optocoupler, a positive pole of the anti-reverse diode is connected to a negative pole of a power supply, and a negative pole of the anti-reverse diode is connected to a positive pole of the power supply.

7. The transient suppression device protection circuit according to claim 4, wherein the alarm module further comprises a first current-limiting resistor and a second current-limiting resistor, and
the first current-limiting resistor is connected in series to an input end of the optocoupler, the second current-limiting resistor is connected in series to an output end of the optocoupler, and the first current-limiting resistor and the second current-limiting resistor are configured to limit a current passing through the optocoupler.

8. A transient suppression device protection method, applied to the transient suppression device protection circuit according to any one of claims 1 to 7, wherein the transient suppression device protection method comprises:
cutting off a current loop in which a transient suppression device is located by controlling a first temperature protection unit connected in series to the transient suppression device to be disconnected if a temperature of the transient suppression device reaches or exceeds a preset first temperature; and
giving an alarm regarding a temperature by controlling a second temperature protection unit connected in parallel to the transient suppression device to be disconnected if the temperature of the transient suppression device reaches or exceeds a preset second temperature, wherein the preset first temperature is higher than the preset second temperature.

9. The transient suppression device protection method according to claim 8, wherein giving an alarm regarding a temperature by controlling a second temperature protection unit connected in parallel to the transient suppression device to be disconnected comprises:
controlling the second temperature protection unit to be disconnected and collecting a high-level signal generated when the second temperature protection unit is disconnected; and
converting the high-level signal into a corresponding low-level logic signal and giving the alarm regarding the temperature according to the low-level logic signal.

10. A transient suppression device protection apparatus, wherein the transient suppression device protection apparatus comprises the transient suppression device protection circuit according to any one of claims 1 to 7.
